# EUROPÄISCHE PATENTSCHRIFT

(11) **EP 2 522 605 B1**
(45) Veröffentlichungstag und Bekanntmachung des Hinweises auf die Patenterteilung: **02.07.2014**
(21) Anmeldenummer: 12166168.0
(22) Anmeldetag: 30.04.2012
(51) Int. Cl.: B65G 47/84, B65G 47/86

(54) **Vorrichtung und Verfahren zum Transportieren von Behältnissen**
Device and Method for transporting containers
Dispositif et procédé pour le transport de récipients

(30) Priorität: 11.05.2011 DE 102011101255
(43) Veröffentlichungstag der Anmeldung: 14.11.2012
(73) Patentinhaber: Krones AG, 93073 Neutraubling (DE)
(72) Erfinder: Kraus, Andreas, 93049 Regensburg (DE)
(74) Vertreter: Bittner, Bernhard

(56) Entgegenhaltungen:
- EP-A1- 2 100 815
- WO-A1-96/26826
- DE-A1- 19 654 350
- DE-U1-202008 014 089
- US-A- 5 232 717

## Beschreibung

Die vorliegende Erfindung bezieht sich auf eine Vorrichtung und ein Verfahren zum Transportieren von Behältnissen und insbesondere von Getränkebehältnissen. Derartige Vorrichtungen sind beispielsweise in Form von Transportbändern oder Transportsternen bekannt. Dabei weisen derartige Transportsterne üblicherweise eine Vielzahl von Greifelementen auf, welche die Behältnisse beispielsweise unterhalb ihres Tragrings greifen und von einer ersten Behandlungseinheit zu einer weiteren Behandlungseinheit transportieren können. Bei einigen Anforderungen im Bereich der getränkeherstellenden Industrie ist es jedoch auch erforderlich, eine Teilung zwischen den einzelnen Behältnissen und auf dem Weg von einer Behandlungsanlage zu einer weiteren Behandlungsanlage zu ändern. Zu diesem Zweck können beispielsweise sogenannte Teilungsverzugssterne eingesetzt werden. Aus der DE 10 2006 023 531 ist eine Vorrichtung zum Transportieren von Stückgut bekannt. Dabei ist ein Transportstern vorgesehen, an dessen einzelnen Armen wiederum schwenk- bzw. drehbare Ausleger mit Greifelementen für die Behältnisse angeordnet sind. Auf diese Weise können die Behältnisse nicht nur bezüglich einer Drehachse transportiert werden, bezüglich der der Transportstern drehbar gelagert ist, sondern zusätzlich auch noch bezüglich weiterer Schwenkachsen.

Aus der WO 2009/144664 A2 ist ebenfalls ein System zum Herstellen von Kunststoffbehältnissen und insbesondere Kunststoffflaschen bekannt. Dabei ist ebenfalls ein Zuführstern vorgesehen, der Kunststoffvorformlinge einer Blasmaschine zuführt, wobei dieser Zuführstern eine Vielzahl von an dem Trägerstern schwenkbaren Armen aufweist, wobei die nen Greifelemente wiederum gegenüber diesen Armen schwenkbar sind. Diese Schwenkbarkeit bezüglich zweier unterschiedlichen Achsen erlaubt bereits höhere Freiheitsgrade beim Transportieren der Behältnisse. Allerdings sind derartige Antriebe mit doppelten Schwenkgelenken vergleichsweise aufwendig sowohl in der Programmierung als auch in der Herstellung.

Die Druckschrift EP 2 100 815 A1 offenbart eine Vorrichtung und ein Verfahren gemäß den Oberbegriffen der Ansprüche 1 und 9. Dabei ist an einem Etikettierkarussell eine Vielzahl von Gebindehandhabungseinrichtungen angeordnet, deren Drehelemente gegenüber dem Etikettierkarussell drehbar sind. Des Weiteren kann ein weiteres Stützelement am Drehelement angeordnet sein, mittels dessen der Abstand zwischen der Drehachse des Gebindes und der zweiten Drehachse veränderbar ist.

Der vorliegenden Erfindung liegt daher die Aufgabe zugrunde eine Vorrichtung und ein Verfahren zur Verfügung zu stellen, welche den Transport von Kunststoffbehältnissen insbesondere zwischen mehreren Behandlungsanlagen vereinfachen. Diese Aufgaben werden durch erfindungsgemäße Vorrichtungen und Verfahren gemäß den unabhängigen Ansprüchen erreicht. Vorteilhafte Ausführungsformen und Weiterbildungen sind Gegenstand der Unteransprüche.

Eine erfindungsgemäße Vorrichtung zum Transportieren von Behältnissen und insbesondere von Kunststoffbehältnissen weist einen um eine vorgegebene Hauptachse drehbaren Hauptträger auf, sowie eine Vielzahl von Transportelementen zum Transportieren der Behältnisse, wobei jedes dieser Transportelemente an einen Ausleger angeordnet ist und gegenüber dem Hauptträger bezüglich einer vorgegebenen geometrischen Schwenkachse schwenkbar ist. Weiterhin ist eine Vielzahl von unabhängig voneinander steuerbaren ersten Antrieben zum Erzeugen der Schwenkbewegungen der Transportelemente bezüglich des Hauptträgers bzw. bezüglich der besagten Schwenkachsen vorgesehen.

Erfindungsgemäß ist jedes Transportelement gegenüber derjenigen Schwenkachse, bezüglich der er schwenkbar ist, auch linear bewegbar, und es ist eine Vielzahl von unabhängig voneinander steuerbaren zweiten Antrieben vorgesehen, um die linearen Bewegungen der Transportelemente zu erzeugen. Erfindungsgemäß sind die ersten und zweiten Antriebe Linearmotoren und die Schwenkbewegung der Transportelemente wird durch Hebelelemente bewirkt, wobei die Hebelelemente den Hauptträger und den ersten Linearmotor verbinden.

Bei den Transportelementen kann es sich beispielsweise um Greifelemente handeln, welche die Behältnisse beispielsweise an einem Tragring fassen, um sie so zu transportieren. Bei den Behältnissen handelt es sich insbesondere um Kunststoffflaschen, es kann sich jedoch bei den Behältnissen auch um Kunststoffvorformlinge handeln oder auch beispielsweise um Glasflaschen.

Bevorzugt sind diese Greifelemente passive Greifelemente und besonders bevorzugt federbelastete Greifelemente. Es wäre jedoch auch denkbar, dass die Greifelemente aktiv sind, d. h. beispielsweise durch einen weiteren Antrieb von einer Schließstellung in eine Öffnungsstellung und umgekehrt übergehen können.

Im Gegensatz zu dem beschriebenen Stand der Technik wird daher vorgeschlagen, dass die Transportelemente linear, d. h. entlang einer geradlinigen Linie bewegbar sind und zusätzlich um ihre jeweiligen Schwenkachsen schwenkbar sind. Durch diese kombinierte Linearbewegung und Schwenkbewegung wird die Bewegungsfreiheit der einzelnen Greifelemente gegenüber dem Stand der Technik erheblich erhöht.

Wie oben erwähnt, kann es bei der Gebindehandhabung vorkommen, dass unterschiedliche Teilungen in den einzelnen Anlagenteilen erforderlich sind. Erfindungsgemäß wird zum Ausgleich dieser unterschiedlichen Teilungen eine Schiebe- und eine Schwenkbewegung vorgeschlagen. Auf diese Weise können unterschiedliche Teilungen angefahren werden und die Übergabe beispielsweise von Behältern auch "begleitet" werden, d. h. an die Bewegung eines nachgeordneten Behandlungsaggregats angepasst werden. Neben der im Stand der Technik bekannten Punktübergabe können also die Behältnisse bei ihrer Übergabe begleitet werden, wodurch die auf die Behältnisse wirkenden Beschleunigungen verringert werden können. Dabei erfolgt vorteilhaft diese lineare Bewegung ohne Zwischenschaltung von mechanischen Getrieben, Spindeln oder Riemen und damit besonders bevorzugt verschleißfrei.

Bei einer weiteren vorteilhaften Ausführungsform sind die einem Transportelement zugeordneten ersten und zweiten Antriebe unabhängig voneinander steuerbar. Dies bedeutet, dass die Schwenkbewegung der Greifelemente und die Bewegung entlang der linearen Richtung voneinander unabhängig sind und auf diese Weise eine hohe Anzahl an beliebigen Positionen für die Greifelemente angefahren werden kann.

Erfindungsgemäß handelt es sich bei den ersten Antrieben um Linearmotoren.

Die zweiten Antriebe sind auch Linearmotoren.

So ist es möglich, dass sich die einzelnen Motoren bzw. Antriebseinheiten aus lediglich zwei Teilen zusammensetzen, nämlich einem Läufer und einem Stator. Der Läufer kann dabei vorteilhaft aus Neodymmagneten bestehen oder solche aufweisen, welche in einer weiteren vorteilhaften Ausführungsform beispielsweise in einem Edelstahlrohr untergebracht sind. In den Statoren können die Motorwicklungen untergebracht sein, aber auch die Lagerungen für den Läufer und weitere Komponenten, wie beispielsweise eine Positionserfassung sowie auch eine Mikroprozessorschaltung für die Überwachung des Motors.

Bei einer weiteren vorteilhaften Ausführungsform handelt es sich bei den beiden Antrieben jeweils um Linearantriebe bzw. Linearmotoren, welche einen gemeinsamen Läufer oder einen gemeinsamen Stator aufweisen. So ist es beispielsweise möglich, dass über einen Linearantrieb, der beispielsweise elektromagnetisch erfolgt, der oben erwähnte Linearhub ermöglicht wird. Für einen zweiten Antrieb wird vorteilhaft mit einer angeschlossenen Hebelkinematik über einen Linearhub eine Drehbewegung erzeugt. So ist es möglich, dass für beide Antriebe eine gemeinsame Läuferstange fungiert.

Bei einer weiteren vorteilhaften Ausführungsform weist wenigstens ein erster Antrieb ein linearbewegliches Antriebselement auf, dessen Linearbewegung (insbesondere mittels einer mechanischen Kopplungseinrichtung) in die Schwenkbewegung des Transportselements bezüglich der jeweiligen Schwenkachse umgesetzt wird. Diese Umsetzung der Linearbewegung und Schwenkbewegung wird unter Bezugnahme auf die Figuren genauer erläutert.

Dabei kann ein Element der Kopplungseinrichtung in einen festen Winkel gegenüber dem oben erwähnten Ausleger angeordnet sein. Bei einer weiteren vorteilhaften Ausführungsform ist die Kopplungseinrichtung an einem Träger oder an einem gegenüber dem Träger drehfesten Bauteil angelenkt. So kann beispielsweise eine zusätzliche Trägerscheibe vorgesehen sein, an der die einzelnen Kopplungseinrichtungen vorteilhaft gelenkig angeordnet sind. Vorteilhaft ist die Kopplungseinrichtung doppelgelenkig aufgebaut und weist also zwei Drehgelenkverbindungen auf.

Bei einer weiteren vorteilhaften Ausführungsform ist wenigstens ein Antriebselement sowohl ein Antriebselement des ersten Antriebs, als auch ein Antriebselement des zweiten Antriebs. So ist es wie oben erwähnt möglich, dass beide Antriebe einen gemeinsamen Stator oder einen gemeinsamen Läufer aufweisen.

Die Ausführung als Linearmotoren bietet gegenüber Lösungen aus dem Stand der Technik den Vorteil, dass keine Schmierstoffe eingesetzt werden müssen und keine "festen" Kurvenbahnen oder Kurvenscheiben. Auch sind keine Laufrollen oder dergleichen nötig, sodass ein Verschleiß erheblich verringert wird. Weiterhin erlauben die erfindungsgemäßen Ausgestaltungen aseptische Ausführungen und auch einen Einsatz im Nassbereich.

Bei einer weiteren vorteilhaften Ausführungsform ist wenigstens ein Ausleger unterhalb des Trägers und/oder wenigstens ein Ausleger oberhalb des Trägers angeordnet. Dabei ist es möglich, dass mehrere oder alle Ausleger unterhalb des Trägers angeordnet sind, es wäre jedoch auch möglich, dass ein Teil der Ausleger oberhalb des Trägers angeordnet ist und ein weiterer Teil der Ausleger unterhalb des Trägers angeordnet ist. So wäre es beispielsweise möglich, dass jeder zweite Ausleger in Umfangsrichtung des Trägers oberhalb des Trägers und jeder zweite Ausleger in Umfangsrichtung des Trägers unterhalb des Trägers angeordnet ist. Auf diese Weise können Kollisionen zwischen den einzelnen Auslegern leichter verhindert werden.

Vorteilhaft sind die einzelnen Schwenkachsen in der Umfangsrichtung des Trägers gleich weit voneinander beabstandet und bevorzugt auch gleich weit von der Trägerachse entfernt.

Die vorliegende Erfindung ist weiterhin auf eine Anlage zum Behandeln von Behältnissen gerichtet, welche eine erste Behandlungseinheit aufweist, welche die Behältnisse in einer ersten vorgegebenen Weise behandelt und welche eine zweite Behandlungseinheit aufweist, welche in der Transportrichtung der Behältnisse nach der ersten Behandlungseinheit angeordnet ist und welche die Behältnisse in einer zweiten vorgegebenen Weise behandelt. Weiterhin ist auch eine zwischen der ersten Behandlungseinheit und der zweiten Behandlungseinheit angeordnete Vorrichtung der oben beschriebenen Art vorgesehen.

Bei einer weiteren vorteilhaften Ausführungsform ist wenigstens eine Behandlungseinheit aus einer Gruppe von Behandlungseinheiten ausgewählt, welche Erwärmungseinrichtungen für Kunststoffvorformlinge, Umformungseinrichtungen zum Umformen von Kunststoffvorformlingen zu Kunststoffbehältnissen, Sterilisationseinrichtungen zum Sterilisieren von Kunststoffvorformlingen oder Kunststoffbehältnissen, Fülleinrichtungen zum Befüllen von Behältnissen, Verschließeinrichtungen zum Verschließen von Behältnissen mit Verschlüssen, Etikettiereinrichtungen zum Etikettieren von Behältnissen, Transporteinrichtungen zum Transportieren von Behältnissen oder dergleichen enthält. Eine Behandlung der Behältnisse kann dabei während eines Transports derselben erfolgen aber auch beispielsweise während eines (partiellen) Stillstands der Transportmittel bzw. Ausleger

So könnte beispielsweise die erfindungsgemäße Vorrichtung als Transportstern zwischen einer Erwärmungseinrichtung zum Erwärmen von Kunststoffvorformlingen und einer Umformungseinheit, wie beispielsweise einer Blasmaschine, genauer dem Blasmaschinenblasrad angeordnet sein. Auch wäre es möglich, dass die erfindungsgemäße Vorrichtung zwischen einem Blasrad und einem nachgeschalteten Stern oder Lufttransport angeordnet ist. Bei einer weiteren vorteilhaften Ausführungsform könnte die Vorrichtung auch als teilungsvariabler Transportstern in einer geblockten Maschine vorgesehen sein.

Daneben wäre es auch möglich, dass die erfindungsgemäße Transportvorrichtung in oder mit einer Vorrichtung zum Sterilisieren von Kunststoffvorformlingen Anwendung findet. Auch wäre es möglich, dass die erfindungsgemäße Vorrichtung beliebige Aufgaben wie Verteilaufgaben, Teilungsveränderungen, Handhabungen von Verpackungen aller Art, Aufnahme und Sortierungsanwendungen (pick and place) und dergleichen, wahrnimmt. Die erfindungsgemäßen Transportelemente können dabei sowohl für ein sogenanntes Neckhandling, d. h. eine Führung an einem Flaschenhals, als auch für einen Boden oder Körperhandling ausgelegt sein. Bei einer weiteren vorteilhaften Ausführungsform ist der Ausleger als eigene Baugruppe ausführbar, sodass er einfach von dem jeweiligen Träger abnehmbar ist (beispielsweise in der Art eines Schnellwechselsystems).

Weiterhin wäre es möglich, dass an dem Ausleger integrierte Steckerverbindungen vorgesehen sind, um die elektrische Anbindung und Steuerung zu erleichtern. Weiterhin könnte ein Bus-System vorgesehen sein, wobei es besonders bevorzugt möglich ist, dass die einzelnen Komponenten unabhängig voneinander adressiert sind. Daneben wäre es auch möglich, dass in der Vorrichtung eine Motorsteuerung bzw. ein Motorcontroller integriert ist. Dabei ist es möglich, dass sich diese Steuerungseinheit mit dem Träger mit bewegt oder ortsfest angeordnet ist. Eine Signalübertragung von der Steuerungseinrichtung kann beispielsweise über einen Schleifring oder dergleichen erfolgen, es wäre jedoch auch eine kabellose Signalübertragung denkbar.

Die vorliegende Erfindung ist weiterhin auf ein Verfahren zum Transportieren von Behältnissen gerichtet, wobei die Behältnisse entlang eines vorgegebenen Transportpfades mit einer Vielzahl von Transportelementen transportiert werden und diese Transportelemente jeweils an einem gemeinsamen Träger angeordnet sind und wobei die Transportelemente während des Transports der Kunststoffbehältnisse mittels einer Vielzahl von ersten unabhängig voneinander steuerbaren Antriebseinrichtungen jeweils bezüglich vorgegebenen Schwenkachsen geschwenkt werden.

Erfindungsgemäß werden die einzelnen Transportelemente wenigstens zeitweise geradlinig gegenüber ihren Schwenkachsen bewegt. Es wird daher auch verfahrensseitig vorgeschlagen, dass sowohl Schwenkbewegungen um Schwenkachsen, als auch Linearbewegungen der einzelnen Transportelemente durchgeführt werden. Vorteilhaft werden die besagten Bewegungen mittels voneinander unabhängigen Antriebsbewegungen durchgeführt, sodass die einzelnen Transportelemente vorteilhaft in jede beliebige Position innerhalb eines bestimmten Radius bzw. Kreissegmentes gefahren werden können.

Weitere Vorteile und Ausführungsformen ergeben sich aus den beigefügten Zeichnungen. Darin zeigen:
- Fig. 1: eine Teilansicht einer erfindungsgemäßen Vorrichtung;
- Fig. 2: eine Teilansicht der in Fig. 1 gezeigten Vorrichtung;
- Fig. 3: eine weitere Ansicht einer erfindungsgemäßen Vorrichtung;
- Fig. 4: eine Ansicht von unten auf die erfindungsgemäße Vorrichtung;
- Fig. 5: eine weitere Draufsicht auf die erfindungsgemäße Vorrichtung;
- Fig. 6: eine Teilansicht einer weiteren Ausführungsform einer erfindungsgemäßen Vorrichtung;
- Fig. 7a-7c: drei Darstellungen eines Auslegers für eine erfindungsgemäße Vorrichtung;
- Fig. 8a, 8b: zwei Ansichten einer weiteren Ausführungsform einer erfindungsgemäßen Vorrichtung;
- Fig. 9a, 9b: zwei Ansichten einer weiteren Ausführungsform einer erfindungsgemäßen Vorrichtung;
- Fig. 10a, 10b: zwei Ansichten einer weiteren Ausführungsform einer erfindungsgemäßen Vorrichtung;
- Fig. 11a, 11b: zwei weitere Darstellungen einer erfindungsgemäßen Vorrichtung in einer weiteren Ausführungsform;
- Fig. 12a, 12b: zwei weitere Ansichten der in Fig. 11a gezeigten Ausführungsform der erfindungsgemäßen Vorrichtung;
- Fig. 13a, 13b: zwei Ansichten einer weiteren Ausführungsform einer erfindungsgemäßen Vorrichtung; und
- Fig. 14a, 14b: zwei Darstellungen einer Anlage mit erfindungsgemäßen Vorrichtungen.

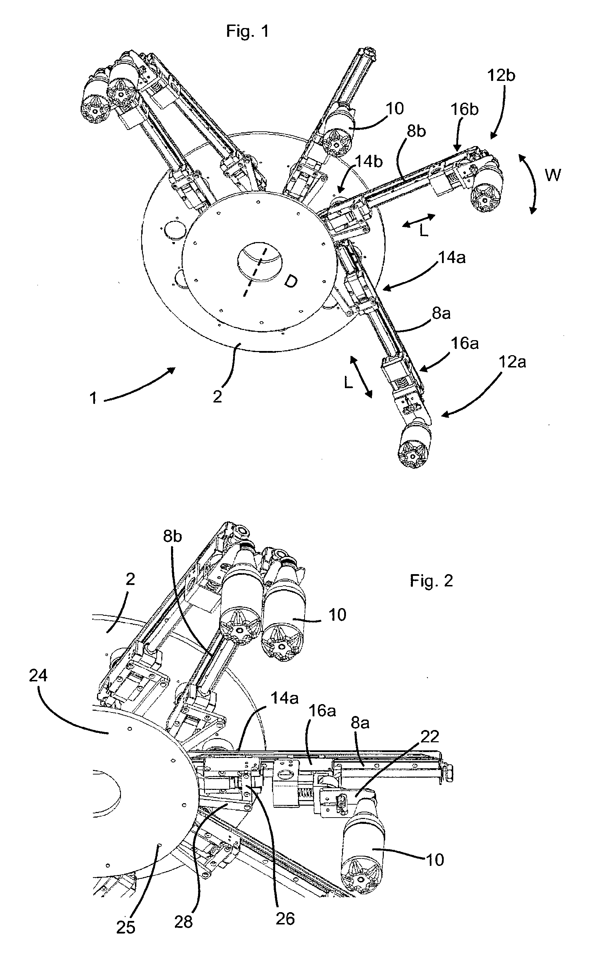

Fig. 1 zeigt eine erfindungsgemäße Vorrichtung in einer ersten Ausführungsform. Dabei ist ein Träger 2 vorgesehen, der um eine geometrische Drehachse D drehbar ist. An diesem Träger ist eine Vielzahl von Transportelementen 12a, 12b angeordnet, die jeweils zum Transportieren der Behältnisse 10 dienen. Dabei weisen die einzelnen Transportelemente 12a, 12b jeweils Ausleger 8a, 8b auf, die an dem Träger 2 bezüglich individueller Schwenkachsen schwenkbar angeordnet sind. Diese einzelnen Schwenkachsen sind dabei hier parallel zu der Drehachse D. Die einzelnen Transportelemente 12a, 12b weisen dabei erste Antriebseinrichtungen 14a, 14b auf, die eine Schwenkbewegung entlang des Pfeils W bezüglich der Schwenkachse bewirken. Weiterhin sind zweite Antriebe bzw. Antriebseinrichtungen 16a, 16b vorgesehen, mit denen die Behältnisse entlang der geradlinigen Richtung L bezüglich der jeweiligen Schwenkachsen verschoben werden können.

Damit erlaubt die Vorrichtung 1 sowohl eine Drehbewegung sämtlicher Behältnisse bezüglich der Drehachse D, als auch eine Schwenkbewegung bezüglich einzelner Schwenkachsen, als auch eine Linearbewegung der Behältnisse bezüglich deren individuellen Schwenkachsen.

Fig. 2 zeigt eine weitere Detaildarstellung der in Fig. 1 gezeigten Vorrichtung. Man erkennt hier wieder die Ausleger 8a, 8b sowie die Behältnisse 10, an denen hier jeweils Greifelemente 22 angeordnet sind. Die Bezugszeichen 26 und 28 sind Bestandteile eines Koppelmechanismus, die ebenfalls eine lineare Bewegung einer Antriebseinrichtung 14a gegenüber dem Ausleger 8a in eine Schwenkbewegung bezüglich der einzelnen Schwenkachsen umwandelt. Das Bezugszeichen 24 kennzeichnet ein Befestigungselement, welches hier drehfest mit dem Träger 2 verbunden ist, und an dem die Kopplungselemente 28 jeweils schwenkbar angelenkt sind. Das Bezugszeichen 25 kennzeichnet beispielhaft eine der genannten Gelenkstellen.

Durch diese Vorgehensweise ist es möglich, eine Behältnisübergabe mit Hilfe eines mit Linearmotoren angesteuerten Mechanismus zu erreichen. Auf diese Weise entfallen die im Stand der Technik genutzten Leitkurven, wodurch das neue System gegenüber dem aus dem Stand der Technik genannten System flexibler und universell einsetzbarer wird. Daneben können die einzelnen Schwenkarme bzw. Ausleger 8a und 8b bei korrekter Auslegung nahezu verschleißfrei und auch schmierungsfrei laufen.

Vorteilhaft erreichen die einzelnen Ausleger in der Bewegungsrichtung W einen Schwenkwinkel von ca. 150°, bevorzugt von ca. 120°. Der Hub, den die einzelnen Greifelemente 22 erreichen, liegt bei ca. 180 mm, bevorzugt bei ca. 140 mm. Wie oben ausgeführt, sind dabei diese Hubbewegung bzw. die Linearbewegung und die Schwenkbewegung der einzelnen Greifelemente unabhängig voneinander steuerbar. Weiterhin wurden für die Materialien der Ausleger und der anderen Elemente leichte Materialien verwendet, um möglichst große Beschleunigungen und/oder Geschwindigkeiten zu erreichen. Wie in Fig. 2 gezeigt, wurde zum Erreichen der Schwenkbewegung, d. h. der Umsetzung einer Linearbewegung in eine Schwenkbewegung ein Hebelantrieb ähnlich einem Kniehebel vorgesehen. Wie erwähnt, kann dabei der Hebel mit seinem losen Ende über einen Bolzen (nicht gezeigt) an dem Träger bzw. der Befestigungseinrichtung 24 gesichert sein.

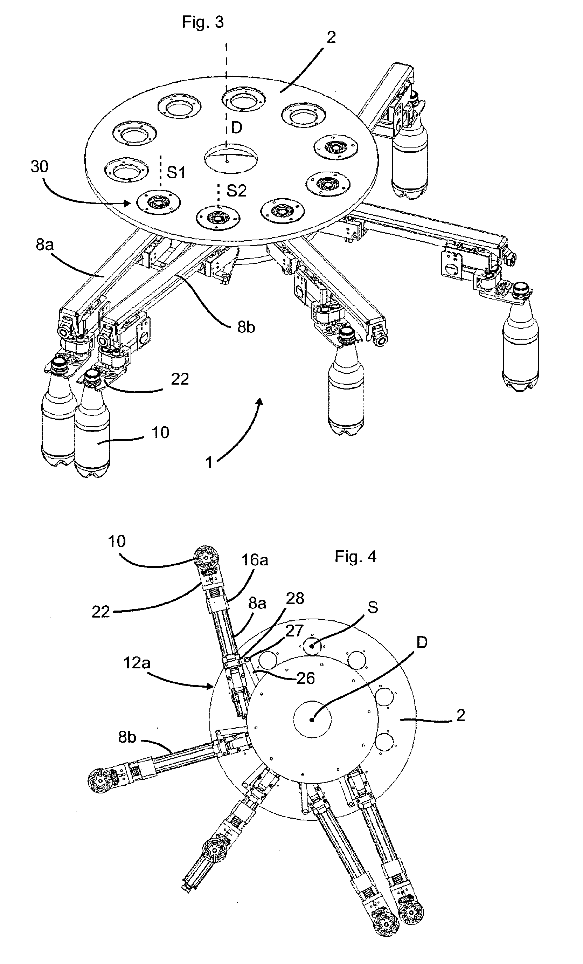

Fig. 3 zeigt eine weitere Darstellung einer erfindungsgemäßen Vorrichtung. Man erkennt hier die einzelnen (geometrischen) Schwenkachsen S1, S2, gegenüber denen die Ausleger 8a und 8b schwenkbar gegenüber dem Träger 2 angeordnet sind. Dabei können Drehlager 30 vorgesehen sein, welche die schwenkbare Lagerung gegenüber dem Träger 2 bewirken.

Fig. 4 zeigt eine Darstellung der in Fig. 3 gezeigten Vorrichtung 1 von unten. Man erkennt auch hier wieder die einzelnen Ausleger 8a, 8b, die schwenkbar bezüglich ihrer Schwenkachsen an dem Träger 2 angeordnet sind. Das Bezugszeichen 27 kennzeichnet eine Gelenkverbindung zwischen den Hebelelementen 26 und 28 mittels denen eine Linearbewegung der Antriebseinrichtung 14a in eine Schwenkbewegung des Auslegers angesetzt wird.

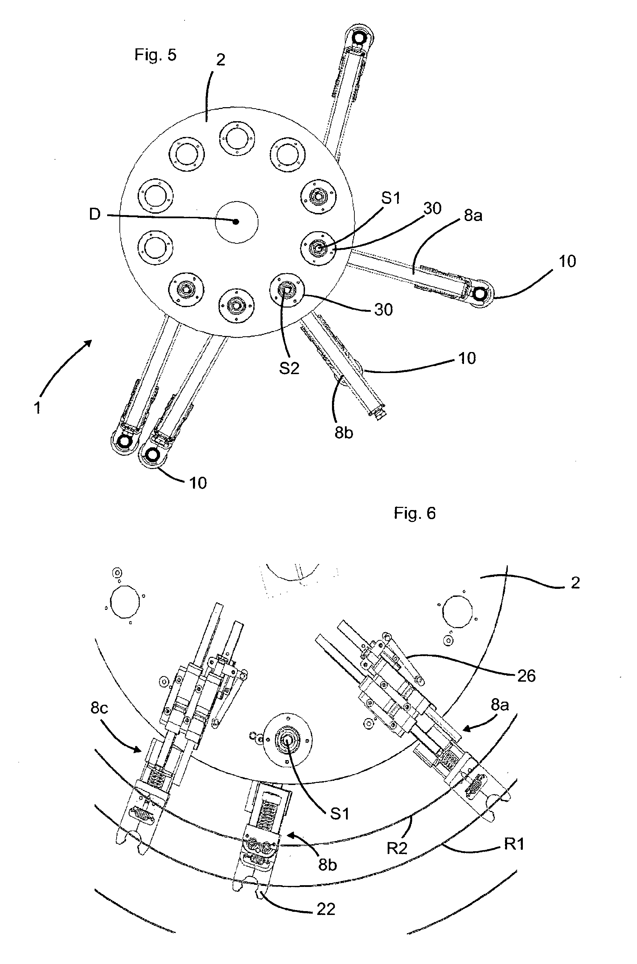

Fig. 5 zeigt eine weitere Darstellung einer erfindungsgemäßen Vorrichtung, wobei man auch hier wieder die einzelnen Schwenkachsen S1 und S2 sowie die zentrale Drehachse D erkennt und auch die einzelnen Drehlager 30 zum Erreichen der Schwenkbewegung dargestellt sind. Man erkennt, dass die Behältnisse 10 hier sehr hohe Freiheitsgrade hinsichtlich ihrer Bewegung aufweisen. Auch erkennt man an der in Fig. 5 gezeigten Darstellung, dass durch die erfindungsgemäße Vorrichtung 1 beispielsweise eine Teilung zwischen den einzelnen Behältnissen verringert oder vergrößert werden kann.

Fig. 6 zeigt eine weitere Ausführungsform einer erfindungsgemäßen Vorrichtung. Bei dieser Ausführungsform sind einige Ausleger 8a, 8c unterhalb des Trägers 2 angeordnet und weitere Ausleger 8b oberhalb des Trägers. Mit anderen Worten sind hier die Ausleger bzw. Schwenkarme in unterschiedlichen Ebenen angeordnet. Dabei können ebenfalls die Greifelemente 22 so platziert sein, dass sie insgesamt wieder die Behältnisse auf der gleichen Höhe transportieren. So könnten beispielsweise bei einigen der Schwenkarme Abstandshalter vorgesehen sein, welche bewirken, dass die einzelnen Greifelemente insgesamt auf der gleichen Höhe liegen. Durch diese Ausführungsform ist es möglich, die einzelnen Ausleger näher aneinander zu platzieren, ohne dass diese miteinander kollidieren, da auf jeweils einer Seite des Trägers nur jeder zweite Ausleger angeordnet ist. Vorteilhaft sind also bei dieser Ausführungsform einige Ausleger unterhalb des Trägers angeordnet und einige Ausleger oberhalb des Trägers.

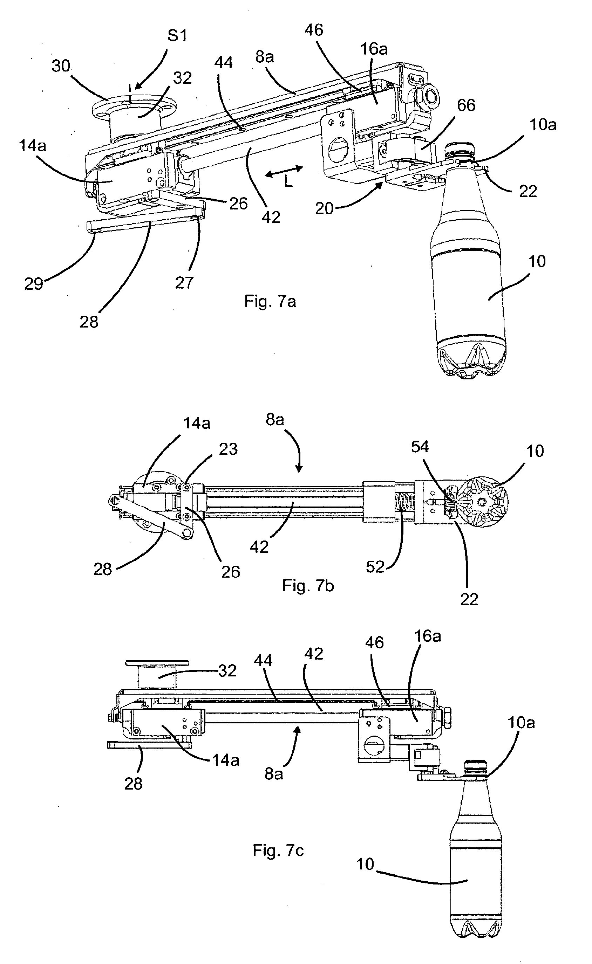

Die Fig. 7a bis 7c zeigen eine erste Darstellung eines erfindungsgemäßen Auslegers einschließlich der Antriebe. Das Bezugszeichen 30 bezieht sich wiederum auf eine Drehlagerung, die zum Durchführen der Schwenkbewegung des Auslegers 8a bezüglich der Schwenkachse S1 dient. Das Behältnis 10 ist hier an einem Greifelement 22 angeordnet, wobei dieses Greifelement 22 genauer das Behältnis 10 unterhalb seines Tragrings 10a greift. Das Bezugszeichen 20 kennzeichnet in seiner Gesamtheit den Haltemechanismus zum Halten des Behältnisses, wobei dieser Haltemechanismus 20 (insbesondere mit dem Greifelement) vorteilhaft abnehmbar an einem Träger 66 angeordnet ist. Das Bezugszeichen 16a kennzeichnet eine zweite Antriebseinrichtung, welche zum Durchführung der Hubbewegung des Greifelements 22 dient. Diese Antriebseinrichtung 16a kann dabei als Stator eines Linearmotors ausgeführt sein, der gegenüber einem Läufer 42 in der Richtung L verschiebbar angeordnet ist. Das Bezugszeichen 44 bezieht sich auf eine Führungsschiene, die zum Halten eines Schlittens 46 dient. Im Folgenden werden die Begriffe Läufer jeweils für die stangenartigen Körper verwendet und die Begriffe Stator für die gegenüber diesen stangenartigen Elementen beweglichen Elemente. Es wäre jedoch hier prinzipiell auch eine andere Definition von Läufer und Stator denkbar.

Das Bezugszeichen 14a kennzeichnet eine erste Antriebseinrichtung, welche zum Durchführen der Schwenkbewegung dient. Dabei ist auch diese erste Antriebseinrichtung 14a als Stator ausgestaltet, der gegenüber dem Läufer 42 bewegbar ist. Damit dient hier der Läufer 42 sowohl als linearmotorisches Antriebselement zum Durchführen der Hubbewegung, als auch zum Durchführen der Schwenkbewegung. Die Linearbewegung der Antriebseinrichtung 14a wird über die Stangen 26 und 28, die miteinander über eine Gelenkverbindung 27 gelenkig verbunden sind, in eine Schwenkbewegung umgesetzt. Hierzu ist die Stange 28 schwenkbar an dem Träger oder der Befestigungseinrichtung (nicht gezeigt) angeordnet. Im Falle einer Linearbewegung der Antriebseinrichtung 14a werden die Winkel zwischen den einzelnen Stangen 26 und 28 und auch die Schwenkstellung des Schwenkelements 28 gegenüber dem Träger verändert und auf diese Weise ändert sich auch der Winkel des Auslegers 8a bezüglich der Schwenkachse S1.

Fig. 7b zeigt eine weitere Darstellung der in Fig. 7a gezeigten Vorrichtung. Man erkennt hier wieder die beiden Stangen 26 und 28, wobei die Stange 26 über Verbindungseinrichtungen (wie Schrauben) 23 starr mit der Antriebseinrichtung 14a verbunden ist. Das Bezugszeichen 52 kennzeichnet ein Federelement durch welches ein Erreichen der Endstellung des Klammerelements 22 gedämpft werden kann. Das Bezugszeichen 54 kennzeichnet ein weiteres Federelement, welches das Greifelement 22 zusammenhält, sodass ein Behältnis gegen den Widerstand dieses Federelements an das Greifelement 22 übergeben werden kann.

Fig 7c zeigt eine weitere Darstellung des Transportarmes. Man erkennt hier wiederum die Führungsschiene 44, die zum Führen des Schlittens 46 dient. Auch ist wiederum das Drehgelenk 30 sichtbar.

Bewegt sich bei der in den Fig. 7a bis 7c gezeigten Vorrichtung die zweite Antriebseinrichtung 16a über den Läufer 42 hinweg, so entsteht eine lineare Schiebebewegung. An dieser Antriebseinrichtung 16a ist auch die Greifeinrichtung 22 befestigt. Bewegt sich die erste Antriebseinrichtung 14a ebenfalls über den Läufer 42 hinweg, entsteht über das Hebegestänge 26 und 28 eine Drehbewegung, die, wie oben erwähnt, durch das Drehlager 30 ermöglicht wird. Wie unten noch gezeigt, sind viele verschiedene Kombinationen mit einem oder mehreren Läufern oder auch einem oder mehreren Statoren denkbar. Außerdem ist es denkbar, den Stator oder Läufer zu bewegen, wobei ein zweiter Stator hierzu eine Relativbewegung durchführt (wobei diese Relativbewegung in eine Drehbewegung oder eine Schubbewegung umgesetzt werden kann).

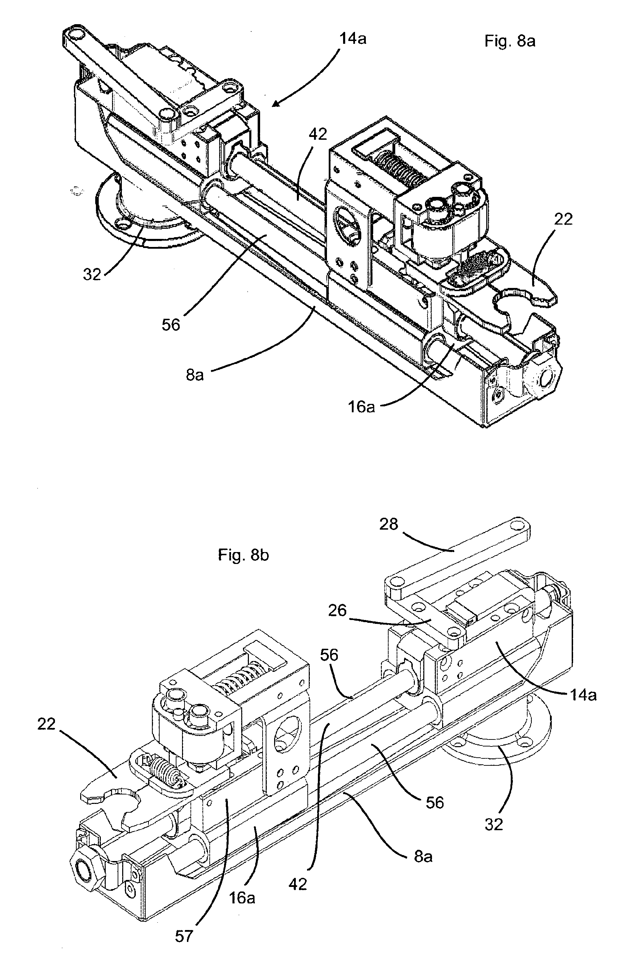

Die Fig. 8a und 8b zeigen eine weitere Ausführungsform, wobei auch hier zwei Statoren bzw. Antriebseinrichtungen auf einem Läufer 42 angeordnet sind. Die Vorteile einer derartigen Anordnung von mehreren Statoren auf einem Läufer sind eine vergleichsweise schmale Bauform des gesamten Arms bzw. Auslegers sowie auch der Kostenvorteil, da nur ein Läufer benötigt wird. Bei dieser Ausführung ist der Läufer 42 fest angeordnet, d. h. fest gegenüber der Schwenkachse und die beiden Läufer bzw. Antriebseinrichtungen 14a und 16a sind beweglich angeordnet. Das Bezugszeichen 56 kennzeichnet eine Führungsstange, die hier zum Führen der Antriebseinrichtung 16a dient. Auch hier ist wieder eine Kopplungseinrichtung vorgesehen, die die Linearbewegung der ersten Antriebseinrichtung 14a in eine Schwenkbewegung bezüglich der Schwenkachse umsetzt.

Fig. 8b zeigt eine weitere Ansicht der in Fig. 8a gezeigten Ausführungsform von unten. Auch hier ist wieder das Greifelement 22 erkennbar sowie auch der Läufer 42 sowie zwei Führungsstangen 56, die zum Führen eines Schlittens 57 dienen. Auf diese Weise kann ein relativ einfacher und steifer Aufbau erreicht werden, wobei vorzugsweise die beiden Führungsstangen 56 als runde Führungsstangen mit Kugelumlaufbüchsen ausgeführt sind. Wie gesagt, ist bei dieser Ausführungsform nur ein Läufer nötig. Allerdings ist der in den Fig. 8a und 8b gezeigte Aufbau relativ lang, da die Hubbewegung und die Schwenkbewegung auf einer Welle laufen und damit hintereinander angeordnet sind.

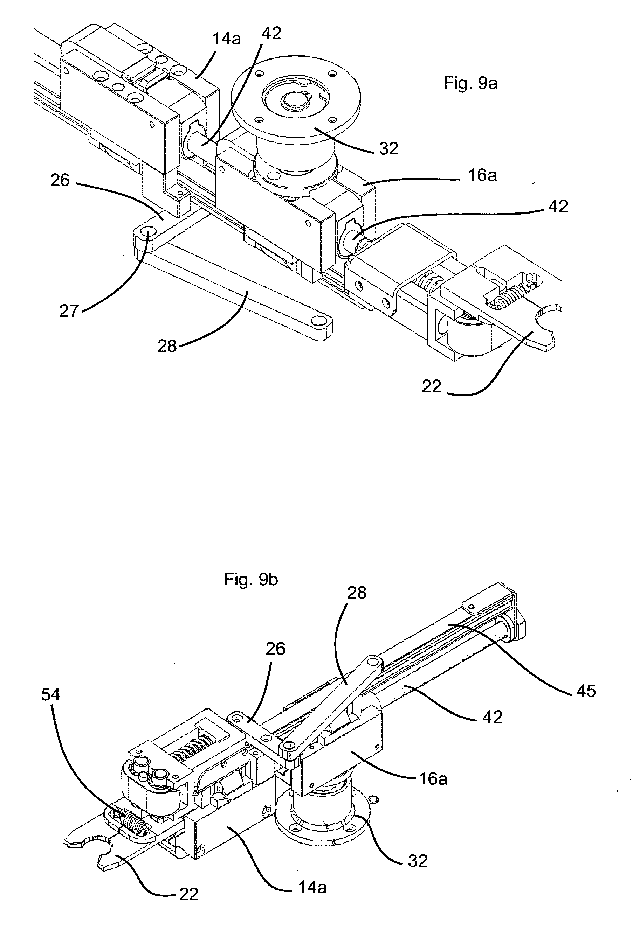

Die Fig. 9a und 9b zeigen eine weitere Ausführungsform, die einer Reduzierung der Länge dient. Um einer Kollision des Grundbleches beispielsweise mit einer Blasform zu entgegnen, wurde der Aufbau des Schwenkarms hier etwas verändert, wobei die Führungsstangen durch eine Linearführung 45 ersetzt wurden. Daneben wurde der Drehpunkt für die Schwenkbewegung genau auf den Stator 16a platziert. Der Stator 16a ist damit bei dieser Ausführungsform nicht linear beweglich bezüglich der Schwenkachse. Die Antriebseinrichtung 16a bzw. der Stator bewegt bei dieser Ausführungsform den Läufer 42, an dem die Klammer 22 befestigt ist. In diesem Falle wird der Schwenkstator bzw. die erste Antriebseinrichtung 14a je nach dem geforderten Schwenkwinkel mit einer Relativbewegung zu dem sich bewegenden Läufer 42 reagieren. Falls beispielsweise keine Veränderung des Schwenkwinkels gewünscht ist, müsste die erste Antriebseinrichtung 14a mit der gleichen Geschwindigkeit, d. h. um die gleiche Strecke gegenüber dem Läufer 42 wie die zweite Antriebseinrichtung 16a verschoben werden. Auf diese Weise können wieder beide Bewegungen auf einem Läufer ermöglicht werden.

Man erkennt, dass bei den in den Fig. 9a und 9b gezeigten Ausführungsformen die erste Antriebseinrichtung 14a einmal zwischen der Greifeinrichtung 22 und der Schwenkachse angeordnet ist und einmal (vgl. Fig. 9a) auf der gegenüberliegenden Seite. Grundsätzlich kann damit die erste Antriebseinrichtung 14a, welche die Schwenkbewegung bezüglich der Schwenkachse bewirkt, an unterschiedlichen Positionen bezüglich der Schwenkachse einerseits und dem Greifelement 22 andererseits angeordnet sein. Man erkennt auch hier wieder die Kopplungselemente bzw. Stangen 26 und 28 die über die Gelenkverbindung 27 miteinander verbunden sind.

Der Vorteil bei dieser Ausführungsform besteht in einem relativ einfachen und steifen Aufbau, da nur ein Läufer notwendig ist. Auch kann die Gefahr von Kollisionen mit Blasformen so verhindert werden. Allerdings ist hierzu eine relativ aufwendige Steuerung wegen der Relativbewegung erforderlich.

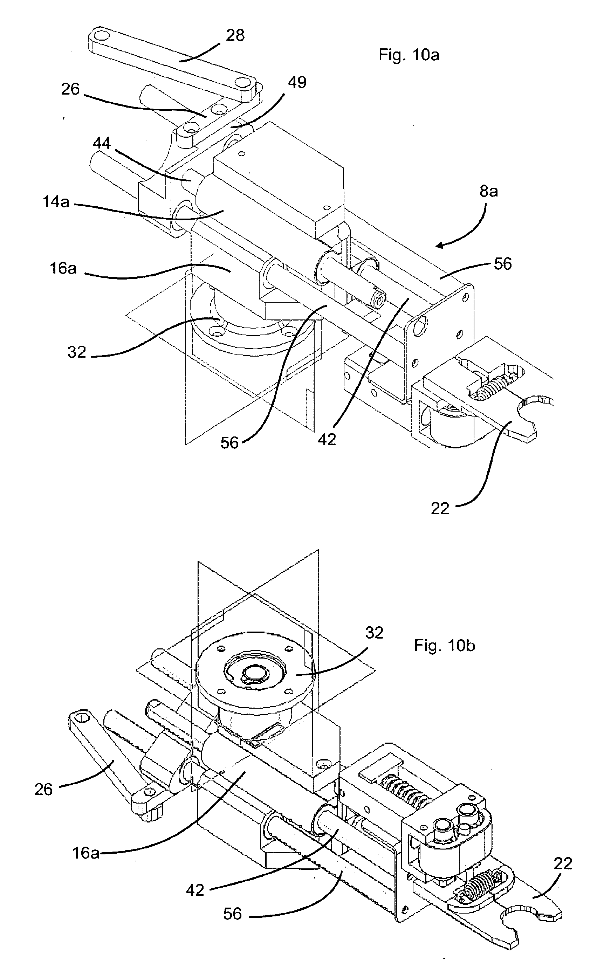

Die Fig. 10a und 10b zeigen weitere Ausführungsformen einer erfindungsgemäßen Vorrichtung. In dieser Ausführungsform sind zwei Statoren und zwei Läufer vorgesehen. Diese Ausführungsform kann sich vor allem dann eignen, wenn aufgrund von Platzproblemen die Version mit nur einem Läufer bei kleinem Teilkreis nicht umgesetzt werden kann. Bei größeren Teilkreisen kann u. U. der Platz für große Schwenkwinkel ausreichen. Das Bezugszeichen 44 kennzeichnet hier wiederum einen Läufer, der zum Durchführen der Hebelbewegung dient. Dieser Läufer 44 bewegt hier einen Träger 49, an dem die Schwenkstangen 26, 28 angeordnet sind. Auf diese Weise wird die Schwenkbewegung des Auslegers 8a realisiert. Das Bezugszeichen 42 kennzeichnet hier den Läufer zur Durchführung der Hubbewegung. Das Bezugszeichen 16a (Fig. 10b) kennzeichnet entsprechend die erste Antriebseinrichtung, die zum Durchführen der Hubbewegung dient.

Auch diese zweite Antriebseinrichtung 16a ist hier wiederum fest gegenüber der Schwenkachse angeordnet. Auch die erste Antriebseinrichtung 14a ist hier fest gegenüber der Schwenkachse angeordnet, wobei hier die beiden Läufer 42 und 44, die als Stangen ausgebildet sind, jeweils bewegt werden, um die Schwenk- und die Hubbewegung zu erreichen. Bei dieser Ausführungsform ist es möglich, die Länge des gesamten Armes zu reduzieren, um Kollisionen im Bereich der großen Schwenkwinkel zu vermeiden. Für die Schwenkbewegung wurde wiederum mit dem bereits oben beschriebenen Hebelprinzip gearbeitet. Auf diese Weise ergeben sich mehrere Möglichkeiten, die Linearmotoren anzuordnen.

Um einen flachen Aufbau zu erreichen, wurden die beiden Linearmotoren 16a und 14a flach auf die Motorflansche gelegt. Auf diese Weise entsteht die in Fig. 10a und 10b gezeigte diagonale Anordnung der beiden Läufer 42, 44 bzw. Führungsstangen. Auf diese Weise wird eine kompakte Bauform erreicht, andererseits ist jedoch die Stromversorgung relativ aufwendig. Weiterhin sind hier auch zusätzlich Kugelbüchsen für die Läuferbewegung notwendig und es ergibt sich insgesamt noch eine relativ lange Bauform.

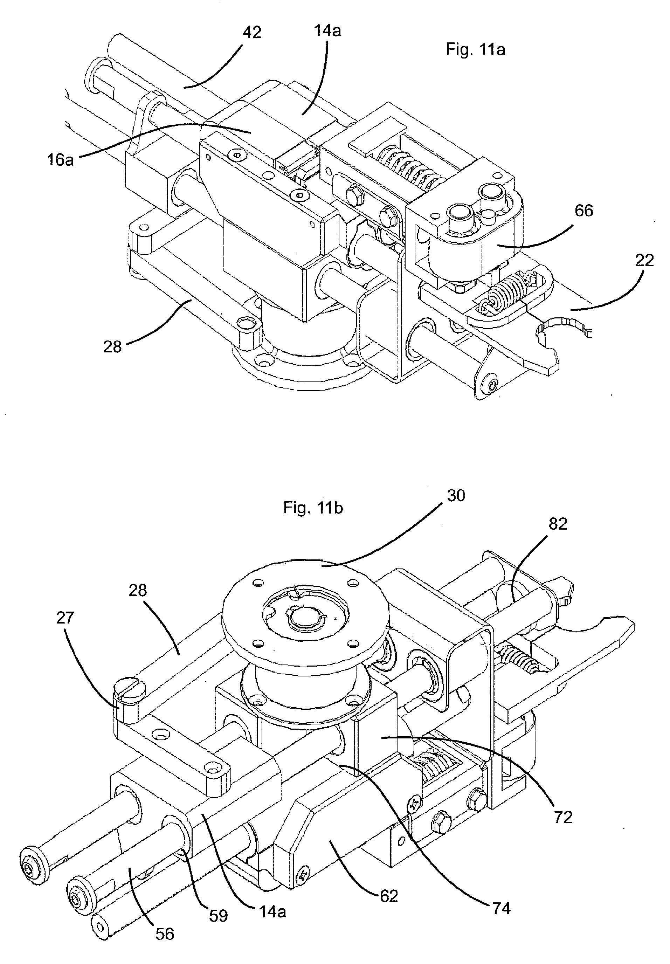

Die Fig. 11a und 11b zeigen eine weitere Ausführungsform mit zwei Statoren und zwei Läufern. Bei dieser Ausführungsform sind die Statoren 14a für die Durchführung der Schwenkbewegung und der Stator 16a für die Durchführung der Hubbewegegung parallel zueinander angeordnet. Der Vorteil dieser Ausführungsform liegt in der Einfachheit der Bauteile und in einer relativ platzsparenden Bauweise. Vorteilhaft ist bei dieser Ausführungsform die Grundplatte 72, die an dem Drehgelenk 30 angeordnet ist mit einer Aussparung 74 versehen, um die erste Antriebseinrichtung 14a zur Durchführung der Schwenkbewegung aufzunehmen. Auf diese Weise ist es möglich, pro Platte mindestens drei Kugelbüchsen aufzunehmen, was wiederum das Laufverhalten verbessert.

Weiterhin wird bei dieser Ausführungsform eine Schleppführung vorgesehen. Die Führungsstangen 56 werden beim Ausfahren der ersten Antriebseinrichtung 14a über eine Sicherungsscheibe 59 mitgezogen und über einen Magneten 82 wieder in die Ruhelage gefahren. Auf diese Weise ergibt sich ein Platzvorteil gegenüber anderen Varianten. Das Bezugszeichen 66 kennzeichnet wiederum den Träger zum Halten der Klammereinrichtung 22. Das Bezugszeichen 62 kennzeichnet in seiner Gesamtheit den Motorflansch, der die beiden Linearmotoren trägt.

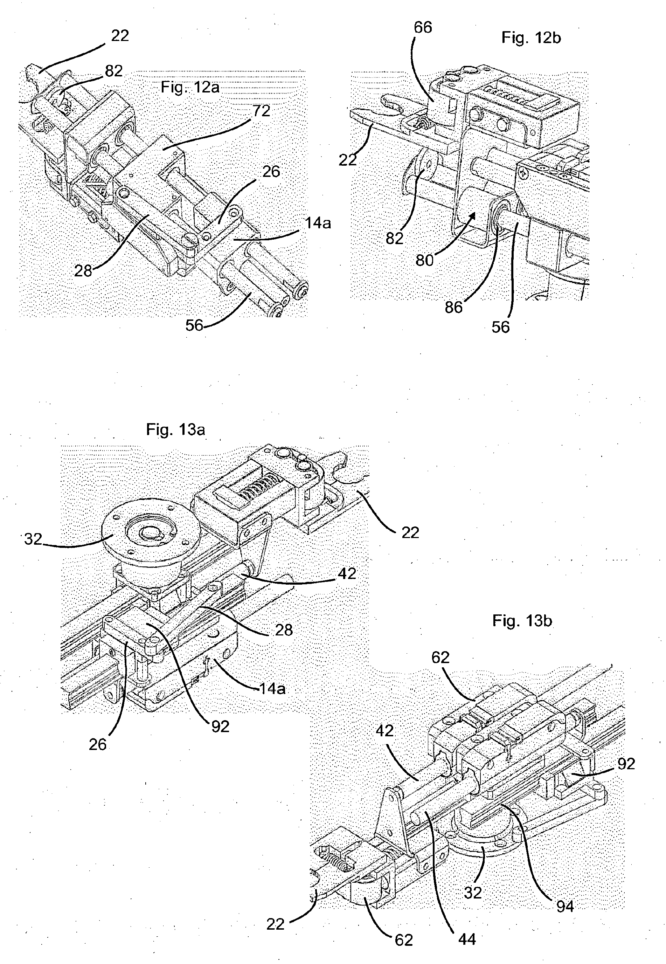

Fig. 12a und 12b zeigen weitere Darstellungen der in den Fig. 11a und 11b gezeigten Ausführungsform. Dabei erkennt man auch den Magneten 82, der, wie oben erwähnt, für den Rücklauf der Führungsstangen 56 dient. Weiterhin bezieht sich das Bezugszeichen 80 auf einen Klammerhalter mit einer Kugelbüchse und das Bezugszeichen 86 auf einen hinteren Anschlag der Führungsstange 56. Diese Ausführungsform bietet den Vorteil einer sehr kompakten Bauform und auch guter Laufeigenschaften des Läufers durch eine bessere Führung. Auch erlaubt diese Form gute Anschlussmöglichkeiten für die Motoren.

Die Fig. 13a und 13b zeigen eine weitere Ausführungsform einer erfindungsgemäßen Vorrichtung. Auch hier sind zwei Linearmotoren parallel zueinander angeordnet, wobei jedoch auch eine Führungsschiene 94 zur Führung der Schwenkbewegung vorgesehen ist. Der Vorteil dieser Ausführungsform besteht in der höheren Steifigkeit der Führungsschiene 94 und in der Montagefreundlichkeit, da dieses System bereits als vormontiertes komplettes System zur Verfügung gestellt werden kann. Das Bezugszeichen 92 kennzeichnet hier einen Schlitten, auf dem wiederum die Stangen 26 und 28 angeordnet sind.

Diese Ausführungsform bietet den Vorteil einer kompakten und steifen Ausführung und besteht weiterhin überwiegend aus Normteilen. Allerdings ist die Verwendung von Linearführungen teurer als die Verwendung von Kugelbüchsen.

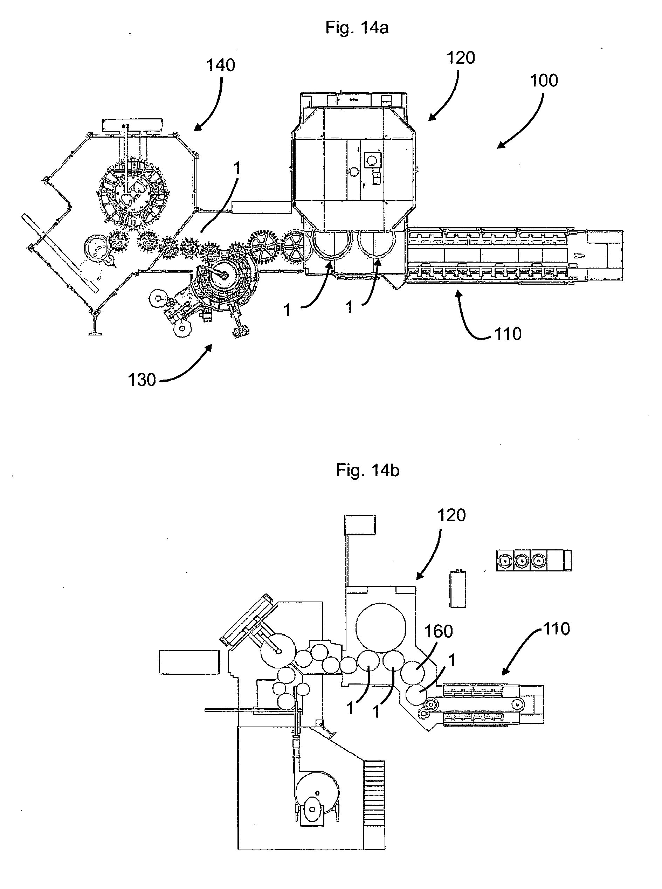

Die Fig. 14a und 14b zeigen zwei Beispiele für erfindungsgemäße Anlagen zum Behandeln von Behältnissen. Diese Anlagen weisen dabei jeweils eine Heizeinrichtung 110 zum Erwärmen von Kunststoffvorformlingen auf. Im Anschluss daran sind jeweils Umformungseinrichtungen 120 zum Umformen von Kunststoffvorformlingen zu Kunststoffbehältnissen vorgesehen, sowie diesen nachgeordnet eine Etikettiereinrichtung 130 zum Etikettieren von Behältnissen und eine Fülleinrichtung 140 zum Befüllen von Behältnissen. Die Bezugszeichen 1 beziehen sich jeweils auf Positionen, an denen die erfindungsgemäßen Vorrichtungen zum Transportieren von Behältnissen angeordnet sein können. Bei der in Fig. 14a gezeigten Anlage können die Vorrichtungen 1 beispielsweise als Servosterne zum Zuführen der Kunststoffvorformlinge an die Blasmaschine 120 und zum Abführen der Kunststoffbehältnisse von der Blasmaschine 120 vorgesehen sein. Auch kann eine erfindungsgemäße Vorrichtung 1 vorgesehen, um eine Teilung zwischen einer Etikettiermaschine 130 und der Fülleinrichtung 140 anzupassen oder zu verändern.

Bei der in Fig. 14b gezeigten Ausführungsform könnten die erfindungsgemäßen Vorrichtungen ebenfalls wieder als Servosterne 1 Einsatz finden oder auch als Transporteinrichtung, welche die Kunststoffvorformlinge von der Heizeinrichtung 110 an eine Sterilisationseinrichtung 160 übergeben.

### Bezugszeichenliste

- 1: Vorrichtung
- 2: Träger
- 8a, 8b, 8c: Ausleger
- 10: Behältnisse
- 10a: Tragring
- 12a, 12b: Transportelemente
- 14a, 14b: erste Antriebseinrichtungen
- 16a, 16b: zweite Antriebseinrichtungen
- 20: Haltemechanismus
- 22: Greifelement, Klammerelement
- 23: Verbindungseinrichtung
- 24: Befestigungselement
- 25: Gelenkstelle
- 26: Bestandteile eines Koppelmechanismus, Hebeelement, Stange
- 27: Gelenkverbindung
- 28: Bestandteile eines Koppelmechanismus, Stange
- 30: Drehlager, Drehgelenk
- 42: Läufer
- 44: Führungsschiene, Stange
- 45: Linearführung
- 46: Schlitten
- 49: Träger
- 52: Federelement
- 54: Federelement
- 56: Führungsstange
- 57: Schlitten
- 59: Sicherungsscheibe
- 62: Motorflansch
- 66: Träger, Klammerhalter
- 72: Grundplatte
- 74: Aussparung
- 80: Klammerhalter
- 82: Magnet
- 86: hinterer Anschlag der Führungsstange
- 92: Schlitten
- 94: Führungsschiene
- 110: Heizeinrichtung
- 120: Blasmaschine
- 130: Etikettiereinrichtung
- 140: Fülleinrichtung
- 160: Sterilisationseinrichtung
- D: Drehachse
- L: Richtung
- S, S1, S2: Schwenkachse
- W: Pfeil (Schwenkbewegung)

## Patentansprüche

1. Vorrichtung (1) zum Transportieren von Behältnissen und insbesondere von Kunststoffbehältnissen (10) mit einem um eine vorgegebene Hauptachse (D) drehbaren Hauptträger (2), mit einer Vielzahl von Transportelementen (12a, 12b) zum Transportieren der Kunststoffbehältnisse (10), wobei jedes dieser Transportelemente (12a, 12b) an einem Ausleger (8a, 8b) angeordnet und gegenüber dem Hauptträger (2) bezüglich einer vorgegebenen geometrischen Schwenkachse (S1, S2) schwenkbar ist und eine Vielzahl von unabhängig voneinander steuerbaren ersten Antrieben (14a, 14b) zum Erzeugen der Schwenkbewegungen der Transportelemente (12a, 12b) vorgesehen ist, wobei
jedes Transportelement (12a, 12b) gegenüber derjenigen Schwenkachse (S1, S2) bezüglich der es schwenkbar ist, auch linear bewegbar ist und eine Vielzahl von unabhängig voneinander steuerbaren zweiten Antrieben (16a, 16b) vorgesehen ist, um die lineare Bewegung der Transportelemente (12a, 12b) zu erzeugen, **dadurch gekennzeichnet, dass** die ersten Antriebe (14a, 14b) und zweiten Antriebe (16a, 16b) Linearmotoren sind, wobei die Schwenkbewegung der Transportelemente (12a, 12b) durch Hebelelemente (26, 28) bewirkt wird, wobei die Hebelelemente (26, 28) den Hauptträger (2) und den ersten Linearmotor (14a, 14b) verbinden.

2. Vorrichtung (1) nach Anspruch 1,
**dadurch gekennzeichnet, dass**
die einem Transportelement (12a, 12b) zugeordneten ersten und zweiten Antriebe unabhängig voneinander steuerbar sind.

3. Vorrichtung (1) nach wenigstens einem der vorangegangenen Ansprüche,
**dadurch gekennzeichnet, dass**
wenigstens ein erster Antrieb (14a, 14b) ein linearbewegliches Antriebselement aufweist, dessen Linearbewegung in die Schwenkbewegung des Transportelements (12) umgesetzt wird.

4. Vorrichtung (1) nach Anspruch 3,
**dadurch gekennzeichnet, dass**
eine Kopplungseinrichtung (26, 28) vorgesehen ist, welche die Linearbewegung des Antriebselements (22) in die Schwenkbewegung des Transportelements (12) umsetzt.

5. Vorrichtung (1) nach wenigstens einem der vorangegangenen Ansprüche,
**dadurch gekennzeichnet, dass**
wenigstens ein Antriebselement (42) sowohl ein Antriebselement eines ersten Antriebs (14a, 14b) als auch ein Antriebselement eines zweiten Antriebs (16a, 16b) ist.

6. Vorrichtung (1) nach wenigstens einem der vorangegangenen Ansprüche,
**dadurch gekennzeichnet, dass**
wenigstens ein Ausleger (8a, 8b) unterhalb des Trägers (2) und wenigstens ein Ausleger (8a, 8b) oberhalb des Trägers (2) angeordnet ist.

7. Anlage zum Behandeln von Behältnissen mit einer ersten Behandlungseinheit (110), welche die Behältnisse (10) in einer ersten vorgegebenen Weise behandelt und mit einer zweiten Behandlungseinheit (120), welche in einer Transportrichtung der Behältnisse nach der ersten Behandlungseinheit (110) angeordnet ist und welche die Behältnisse (10) in einer zweiten vorgegebenen Weise behandelt und mit einer zwischen der ersten Behandlungseinheit (110) und der zweiten Behandlungseinheit (120) angeordneten Vorrichtung nach wenigstens einem der vorangegangenen Ansprüche 1 - 6.

8. Anlage nach Anspruch 7,
**dadurch gekennzeichnet, dass**
wenigstens eine Behandlungseinheit (110, 120) aus einer Gruppe von Behandlungseinheiten ausgewählt ist, welche Erwärmungseinrichtungen für Kunststoffvorformlinge, Umformungseinrichtungen zum Umformen von Kunststoffvorformlingen zu Kunststoffbehältnissen, Sterilisationseinrichtungen zum Sterilisieren von Kunststoffvorformlingen oder Kunststoffbehältnissen, Fülleinrichtungen zum Befüllen von Behältnissen, Verschließeinrichtungen zum Verschließen von Behältnissen mit Verschlüssen, Etikettiereinrichtungen zum Etikettieren von Behältnissen, Transporteinrichtungen zum Transportieren von Behältnissen oder dergleichen enthält.

9. Verfahren zum Transportieren von Behältnissen (10) wobei die Behältnisse (10) entlang eines vorgegebenen Transportpfades mit einer Vielzahl von Transportelementen (12a, 12b) transportiert werden und diese Transportelemente (12a, 12b) jeweils an einem gemeinsamen drehbaren Träger (2) angeordnet sind, und wobei die Transportelemente (12a, 12b) während des Transports der Kunststoffbehältnisse (10) mittels einer Vielzahl von ersten unabhängig voneinander steuerbaren Antriebseinrichtungen (14a, 14b) jeweils bezüglich vorgegebenen Schwenkachsen (S1, S2) geschwenkt werden, wobei
die einzelnen Transportelemente (12a, 12b) von unabhängig voneinander steuerbaren zweiten Antrieben (16a, 16b) wenigstens zeitweise geradlinig gegenüber ihren Schwenkachsen (S1, S2) bewegt werden, **dadurch gekennzeichnet, dass** die ersten Antriebe (14a, 14b) und zweiten Antriebe (16a, 16b) Linearmotoren sind, wobei die Schwenkbewegung der Transportelemente (12a, 12b) durch Hebelelemente (26, 28) bewirkt wird, wobei die Hebelelemente (26, 28) den Hauptträger (2) und den ersten Linearmotor (14a, 14b) verbinden.

## Claims

1. Device (1) for transporting containers and in particular plastic containers (10) with a main carrier (2) rotatable about a pre-specified main axis (D), with a multiplicity of transport elements (12a, 12b) for transporting the plastic containers (10), wherein each of these transport elements (12a, 12b) is arranged on an arm (8a, 8b) and can swivel in relation to the main carrier (2) with respect to a pre-specified geometric pivot axis (S1, S2), and wherein a multiplicity of independently controllable first drives (14a, 14b) is provided to generate the swivel movements of the transport elements (12a, 12b), wherein each transport element (12a, 12b) is also movable linear in relation to the pivot axis (S1, S2) about which it can swivel, and a multiplicity of independently controllable second drives (16a, 16b) is provided to generate the linear movement of the transport elements (12a, 12b), **characterized in that** the first drives (14a, 14b) and the second drives (16a, 16b) are linear motors, the pivoting of the transport elements (12a, 12b) being effected by means of lever elements (26, 28), the lever elements (26, 28) linking the main carrier (2) with the first linear motor (14a, 14b).

2. Device (1) according to claim 1, **characterised in that** the first and second drives allocated to a transport element (12a, 12b) can be controlled independently of each other.

3. Device (1) according to at least one of the preceding claims, **characterised in that** at least one first drive (14a, 14b) has a linearly movable drive element, the linear motion of which is converted into the swivel motion of the transport element (12).

4. Device (1) according to claim 3, **characterised in that** a coupling device (26, 28) is provided which converts the linear motion of the drive element (22) into the swivel motion of the transport element (12).

5. Device (1) according to at least one of the preceding claims, **characterised in that** at least one drive element (42) is both a drive element of a first drive (14a, 14b) and a drive element of a second drive (16a, 16b).

6. Device (1) according to at least one of the preceding claims, **characterised in that** at least one arm (8a, 8b) is arranged below the carrier (2) and at least one arm (8a, 8b) above the carrier (2).

7. Plant for processing containers with a first processing unit (110) which processes the containers in a first pre-specified manner and with a second processing unit (120) which is arranged after the first processing unit (110) in a transport direction of the containers and which processes the containers (10) in a second pre-specified manner, and with a device according to at least one of the preceding claims 1 to 6 arranged between the first processing unit (110) and the second processing unit (120).

8. Plant according to claim 7, **characterised in that** at least one processing unit (110, 120) is selected from a group of processing units which comprises heating devices for plastic preforms, shaping devices for shaping plastic preforms into plastic containers, sterilisation devices for sterilising plastic preforms or plastic containers, filling devices for filling containers, closing devices for closing containers with closures, labelling devices for labelling containers, transport devices for transporting containers or the like.

9. Method for transporting containers (10), wherein the containers (10) are transported along a pre-specified transport path with a multiplicity of transport elements (12a, 12b) and these transport elements (12a, 12b) are each arranged on a common rotatable carrier (2), and wherein during transport of the plastic containers (10) the transport elements (12a, 12b) are swivelled each in relation to pre-specified pivot axes (S1, S2) by means of a multiplicity of independently controllable first drive devices (14a, 14b), wherein the individual transport elements (12a, 12b) at least part of the time are moved in a straight line in relation to their pivot axes (S1, S2) by means of second drives (16a, 16b) which can be controlled independently with respect to each other, **characterized in that**
the first drives (14a, 14b) and the second drives (16a, 16b) are linear motors, the pivoting of the transport elements (12a, 12b) being effected by means of lever elements (26, 28), the lever elements (26, 28) linking the main carrier (2) with the first linear motor (14a, 14b).

## Revendications

1. Dispositif (1) pour le transport de récipients, et en particulier de récipients en matière plastique (10), avec un support principal (2) rotatif autour d'un axe principal (D) défini, avec une pluralité d'éléments de transport (12a, 12b) pour le transport des récipients en matière plastique (10), chacun desdits éléments de transport (12a, 12b) étant disposé sur un bras (8a, 8b) et étant pivotant par rapport au support principal (2) relativement à un axe de pivotement (S1, S2) géométrique défini, et une pluralité de premiers entraînements (14a, 14b) pouvant être commandés indépendamment les uns des autres étant prévue pour générer les mouvements de pivotement des éléments de transport (12a, 12b),
chaque élément de transport (12a, 12b) étant également déplaçable linéairement par rapport à l'axe de pivotement (S1, S2) relativement auquel il est pivotant, et une pluralité de deuxièmes entraînements (16a, 16b) pouvant être commandés indépendamment les uns des autres étant prévue pour générer le mouvement linéaire des éléments de transport (12a, 12b), **caractérisé en ce que**
les premiers entraînements (14a, 14b) et les deuxièmes entraînements (16a, 16b) sont des moteurs linéaires, le mouvement de pivotement des éléments de transport (12a, 12b) étant produit par des éléments de levage (26, 28), lesdits éléments de levage (26, 28) reliant le support principal (2) et le premier moteur linéaire (14a, 14b).

2. Dispositif (1) selon la revendication 1, **caractérisé en ce que** les premiers et deuxièmes entraînements associés à un élément de transport (12a, 12b) peuvent être commandés indépendamment les uns des autres.

3. Dispositif (1) selon au moins une des revendications précédentes, **caractérisé en ce qu'**au moins un premier entraînement (14a, 14b) est pourvu d'un élément d'entraînement déplaçable linéairement, dont le mouvement linéaire est converti en mouvement de pivotement de l'élément de transport (12).

4. Dispositif (1) selon la revendication 3, **caractérisé en ce qu'**un dispositif d'accouplement (26, 28) est prévu, lequel convertit le mouvement linéaire de l'élément d'entraînement (22) en mouvement de pivotement de l'élément de transport (12).

5. Dispositif (1) selon au moins une des revendications précédentes, **caractérisé en ce qu'**au moins un élément d'entraînement (42) est un élément d'entraînement d'un premier entraînement (14a, 14b) ainsi qu'un élément d'entraînement d'un deuxième entraînement (16a, 16b).

6. Dispositif (1) selon au moins une des revendications précédentes, **caractérisé en ce qu'**au moins un bras (8a, 8b) est disposé en dessous du support (2), et au moins un bras (8a, 8b) au-dessus du support (2).

7. Installation pour le traitement de récipients avec une première unité de traitement (110), laquelle traite les récipients (10) d'une première manière définie et avec une deuxième unité de traitement (120), laquelle est disposée en aval de la première unité de traitement (110) dans une direction de transport des récipients et traite les récipients (10) d'une deuxième manière définie, et avec un dispositif selon au moins une des revendications 1 à 6 disposé entre la première unité de traitement (110) et la deuxième unité de traitement (120).

8. Installation selon la revendication 7, **caractérisée en ce qu'**au moins une unité de traitement (110, 120) est sélectionnée dans un groupe d'unités de traitement qui comprend des dispositifs de chauffage pour des préformes en matière plastique, des dispositifs de déformation pour la transformation de préformes en matière plastique en récipients en matière plastique, des dispositifs de stérilisation pour la stérilisation de préformes en matière plastique ou de récipients en matière plastique, des dispositifs de remplissage pour le remplissage de récipients, des dispositifs de bouchage pour le bouchage de récipients avec des bouchons, des dispositifs d'étiquetage pour l'étiquetage de récipients, des dispositifs de transport pour le transport de récipients, ou des dispositifs similaires.

9. Procédé de transport de récipients (10), lesdits récipients (10) étant transportés le long d'un chemin de transport défini avec une pluralité d'éléments de transport (12a, 12b) et lesdits éléments de transport (12a, 12b) étant disposés chacun sur un support rotatif (2) commun, et les éléments de transport (12a, 12b) étant pivotés chacun par rapport à des axes de pivotement (S1, S2) définis pendant le transport des récipients en matière plastique (10), au moyen d'une pluralité de premiers dispositifs d'entraînement (14a, 14b) pouvant être commandés indépendamment les uns des autres,
les différents éléments de transport (12a, 12b) de deuxièmes entraînements (16a, 16b) pouvant être commandés indépendamment les uns des autres étant au moins temporairement déplacés en ligne droite par rapport à leurs axes de pivotement (S1, S2), **caractérisé en ce que**
les premiers entraînements (14a, 14b) et les deuxièmes entraînements (16a, 16b) sont des moteurs linéaires, le mouvement de pivotement des éléments de transport (12a, 12b) étant produit par des éléments de levage (26, 28), lesdits éléments de levage (26, 28) reliant le support principal (2) et le premier moteur linéaire (14a, 14b).
